# EUROPÄISCHE PATENTANMELDUNG

(11) **EP 4 806 811 A1**
(43) Veröffentlichungstag der Anmeldung: **16.09.2026**
(21) Anmeldenummer: 26164614.5
(22) Anmeldetag: 13.03.2026
(51) Int. Cl.: B65G 47/66

(54) **SICHERER ÜBERGANG FÜR FÖRDERSYSTEME**

(30) Priorität: 14.03.2025 DE 102025109894
(71) Anmelder: Gerhard Schubert GmbH, 74564 Crailsheim (DE)
(72) Erfinder: Mikusch,, Harald, 74564 Crailsheim (DE); Bögelein, Rolf, 74564 Crailsheim (DE); Schubert, Peter, 74564 Crailsheim (DE)
(74) Vertreter: Weickmann & Weickmann PartmbB

(57) **Zusammenfassung**

Die vorliegende Anmeldung betrifft eine Transportvorrichtung mit einem Transportmittel zum Transportieren von Objekten entlang eines Transportwegs, wobei das Transportmittel mindestens eine Kontaktfläche aufweist, welche dafür eingerichtet ist, ein Objekt zu kontaktieren und entlang des Transportwegs mitzunehmen, wobei die Transportvorrichtung dafür eingerichtet ist, eine Ausweichbewegung des Transportmittels entlang eines von dem Bewegungspfad des Transportmittels abweichenden Auslösepfads zu erlauben, wenn auf das Transportmittel eine Kraft einwirkt, die eine vorbestimmte Auslösekraft überschreitet.

## Beschreibung

Die vorliegende Anmeldung betrifft eine Transportvorrichtung mit einem Transportmittel zum Transportieren von Objekten entlang eines Transportwegs, wobei das Transportmittel mindestens eine Kontaktfläche aufweist, welche dafür eingerichtet ist, ein Objekt zu kontaktieren und entlang des Transportwegs mitzunehmen.

Derartige Transportvorrichtungen werden üblicherweise als Teil von beispielsweise Produktionsanlagen und/oder Sortieranlagen eingesetzt und dazu verwendet, Objekte beispielsweise zwischen verschiedenen Verarbeitungsstationen zu transportieren. Transportvorrichtungen können dabei beispielsweise an Verarbeitungsbereiche wie zum Beispiel an einen Tisch, eine Ablage oder eine Maschine zur Verarbeitung angrenzen. Zudem werden auf einem Transportweg häufig mehrere Transportvorrichtungen kombiniert. Dabei ergeben sich Schnittstellen zwischen aufeinanderfolgenden Transportvorrichtungen und/oder Verarbeitungsbereichen, an welchen ein zu transportierendes Objekt von einer Transportvorrichtung oder einem Verarbeitungsbereich auf eine darauffolgende Transportvorrichtung oder einen darauffolgenden Verarbeitungsbereich übergeht. Ein Transportmittel einer Transportvorrichtung wird an einem solchen Übergang üblicherweise nahe an dem Transportmittel einer benachbarten Transportvorrichtung oder nahe an einem benachbarten Verarbeitungsbereich angeordnet, um einen Zwischenraum dazwischen klein zu halten und beispielsweise ein Risiko für Beschädigungen des Objekts bei dem Übergang zu verringern. Durch eine entsprechend kleine Dimensionierung des Zwischenraums ergeben sich gleichzeitig allerdings auch Risiken. Insbesondere bestehet für eine Person, welche sich in der Nähe der Transportvorrichtungen aufhält, ein Verletzungsrisiko, wenn sie von einem Transportmittel erfasst und im Zwischenraum eingeklemmt wird. Ebenfalls kann ein Objekt oder Fremdkörper erfasst und im Zwischenraum eingeklemmt werden, sodass Transportvorrichtung und/oder Verarbeitungsbereich oder eingeklemmte Gegenstände beschädigt werden können.

Um solchen Risiken entgegenzuwirken, ist aus dem Stand der Technik beispielsweise eine Abschaltvorrichtung bekannt, welche ein Transportmittel einer Transportvorrichtung stoppt, sollte eine Einklemmung im Zwischenraum festgestellt werden. Eine solche Abschaltung kann im Allgemeinen aber nur das Ausmaß von Verletzungen und/oder Beschädigungen begrenzen, nicht aber eine Einklemmung von vorneherein unterbinden. Auch ist aus dem Stand der Technik der Ansatz bekannt, den Zwischenraum so weit wie möglich zu minimieren, insbesondere um zu verhindern, dass eine Person beispielsweise mit Gliedmaßen in den Zwischenraum gelangen und hier verletzt werden kann. Den Zwischenraum zu verkleinern ist jedoch nur begrenzt möglich und kann nicht verhindern, dass beispielsweise Haare, Kleidung und/oder Finger erfasst und eingeklemmt werden.

Vor diesem Hintergrund war es Aufgabe der vorliegenden Erfindung, eine Transportvorrichtung zum Transportieren von Objekten entlang eines Transportwegs zur Verfügung zu stellen, welche die Nachteile der bekannten Lösungen adressiert. Damit sollen das Risiko eines Einklemmens insbesondere von Personen und/oder Gegenständen zwischen einem Transportmittel einer Transportvorrichtung und einer benachbarten Transportvorrichtung oder einem benachbarten Verarbeitungsbereich, sowie die Auswirkungen im Falle eines Einklemmens, also insbesondere Verletzungen und Beschädigungen, minimiert werden.

Gemäß einem ersten Aspekt der Erfindung wird die vorstehend genannte Aufgabe gelöst durch eine Transportvorrichtung zum Transportieren von Objekten entlang eines Transportwegs, umfassend einen Träger, welcher einen Montageabschnitt aufweist, der dafür eingerichtet ist, die Transportvorrichtung an einer übergeordneten Struktur zu halten oder abzustützen, ein Transportmittel, welches beweglich an dem Träger gelagert ist, so dass es eine Bewegung entlang eines definierten, zyklischen Bewegungspfads ausführt, wobei das Transportmittel mindestens eine Kontaktfläche aufweist, welche dafür eingerichtet ist, ein Objekt zu kontaktieren und entlang des Transportwegs mitzunehmen, wobei die Transportvorrichtung dafür eingerichtet ist, eine Ausweichbewegung des Transportmittels entlang eines von dem Bewegungspfad des Transportmittels abweichenden Auslösepfads zu erlauben, wenn auf das Transportmittel eine Kraft einwirkt, die eine vorbestimmte Auslösekraft überschreitet.

Gemäß einem wichtigen Merkmal dieses Aspekts ist die Transportvorrichtung dafür eingerichtet, eine Ausweichbewegung des Transportmittels entlang eines von dem Bewegungspfad des Transportmittels abweichenden Auslösepfads zu erlauben, wenn auf das Transportmittel eine Kraft einwirkt, die eine vorbestimmte Auslösekraft überschreitet. Eine solche Ausweichbewegung hat beispielsweise den Effekt, dass die maximale, auf eine Person und/oder einen Gegenstand einwirkende Kraft bevorzugt auf die vorbestimmte Auslösekraft beschränkt ist. Die Ausweichbewegung des Transportmittels kann dabei insbesondere dadurch erfolgen, dass eine Bewegung der Transportvorrichtung als Ganzes erfolgt und/oder dass eine Bewegung des Transportmittels relativ zu anderen Komponenten der Transportvorrichtung erfolgt. Insbesondere kann eine Ausweichbewegung vorteilhafterweise eine Rotation und/oder eine Verlagerung der Transportvorrichtung und/oder des Transportmittels umfassen. Bevorzugt kann eine Ausweichbewegung als eine Verlagerung in etwa horizontal und/oder in etwa vertikal bevorzugt nach oben erfolgen und kann insbesondere mit einer Rotation überlagert sein. Vorteilhafterweise kann die Auslösekraft derart vorbestimmt sein, dass die Transportvorrichtung unter herkömmlichen Betriebsbedingungen einen stabilen und sicheren Transport von Objekten entlang des Transportwegs ermöglicht. Eine Krafteinwirkung kann beispielsweise durch Betätigung des Transportmittels selbst entstehen, wenn eine Person und/oder ein Objekt mit der Kontaktfläche des Transportmittels in Eingriff steht, insbesondere wenn sie und/oder es zwischen dem Transportmittel und einer benachbarten Vorrichtung, insbesondere einer weiteren Transportvorrichtung und/oder einem Verarbeitungsbereich, wie zum Beispiel einem Tisch, einer Ablage oder einer Maschine zur Verarbeitung, eingeklemmt wird, und/oder wenn die Person und/oder das Objekt von außen, insbesondere bei einem Einklemmen, gegen die Transportvorrichtung gedrückt wird. Indem der Auslösepfad von dem Bewegungspfad des Transportmittels abweicht, wird insbesondere gewährleistet, dass eine Krafteinwirkung unterbrochen und/oder reduziert wird. Insbesondere wird verhindert, dass eine Krafteinwirkung zu einer Verletzung der Person und/oder zu einer Beschädigung des Transportmittels, der Transportvorrichtung, des zu transportierenden Objekts und/oder anderer Vorrichtungen führt.

Das Transportmittel ist bevorzugt ein umlaufendes Transportband, dessen Bewegungspfad durch mindestens zwei im Abstand angeordnete Umlenkmittel definiert ist, um welche das Transportband umläuft. Insbesondere definiert ein solches Transportband eine kontinuierliche Kontaktfläche. Ein Transportband kann beispielsweise riemenartig gestaltet sein und insbesondere aus Textilmaterial, Kunststoff, und/oder aus Metall gefertigt sein. Es kann ferner kettenartig gebildet sein, wobei insbesondere eine Mehrzahl von kettengliedartigen Elementen derart miteinander gelenkig verbundenen sind, dass sie ein umlaufendes Transportband definieren. Ein Transsportband weist in der Regel den Vorteil auf, dass sich darin keine Objekte und Personen unvorhergesehen verfangen können, insbesondere wenn die Kontaktfläche durch ein durchgehendes Material gebildet ist.

Das Transportmittel kann bevorzugt wenigstens eine Walze und/oder Rolle, insbesondere eine Mehrzahl von Walzen und/oder Rollen umfassen. Dabei ist eine Walze und/oder Rolle um eine Drehachse drehbar an dem Träger der Transportvorrichtung gelagert. Insbesondere benachbarte Walzen und/oder Rollen, welche bevorzugt parallel und/oder eng benachbart angeordnet sind, definieren dabei gemeinsam eine Transportfläche, entlang welcher der Transportweg über die benachbarten Walzen und/oder Rollen hinweg verläuft. Walzen und/oder Rollen können frei drehbar um die Drehachse gelagert sein und/oder zur Rotation angetrieben sein, um dann einen Vortrieb für zu transportierende Objekte zu generieren.

Vorteilhafterweise kann die Transportvorrichtung mehrere der zuvor genannten Ausführungsformen von Transportmitteln umfassen.

Vorzugsweise ist der Montageabschnitt dafür eingerichtet, einen Halteeingriff zwischen der Transportvorrichtung und einer übergeordneten Struktur aufrechtzuerhalten, wenn eine auf den Montageabschnitt einwirkende Kraft kleiner ist als eine vorbestimmte Haltekraft des Montageabschnitts, und den Halteeingriff zu lösen, wenn eine auf den Montageabschnitt einwirkende Kraft größer ist als die vorbestimmte Haltekraft des Montageabschnitts. Eine solche übergeordnete Struktur kann beispielsweise ein Rahmen, eine Strebe, ein Gehäuseteil insbesondere einer anderen Vorrichtung und/oder eine Wand sein. Insbesondere kann an der übergeordneten Struktur ein Befestigungsabschnitt vorgesehen sein, mit welchem der Montageabschnitt der Transportvorrichtung in Eingriff steht oder gebracht werden kann. Bevorzugt kann die Transportvorrichtung und/oder der Montageabschnitt unter, über und/oder neben der übergeordneten Struktur und/oder dem Befestigungsabschnitt der übergeordneten Struktur angeordnet sein. Dabei entspricht die vorbestimmte Haltekraft insbesondere der vorbestimmten Auslösekraft und die auf den Montageabschnitt einwirkende Kraft ist bevorzugt durch die auf das Transportmittel einwirkende Kraft hervorgerufen. Eine derartige Ausbildung der Erfindung ist insbesondere dann vorteilhaft, wenn die Ausweichbewegung als eine Bewegung der Transportvorrichtung als Ganzes und/oder des Transportmittels gemeinsam mit von dem Montageabschnitt gestützten Komponenten der Transportvorrichtung erfolgen soll.

In einem bevorzugten Ausführungsbeispiel des ersten Aspekts weist der Montageabschnitt mindestens eine Magnetanordnung auf. Eine solche Magnetanordnung kann beispielsweise Permanentmagnete und/oder Elektromagnete umfassen. Insbesondere wenn ein Elektromagnet umfasst ist, kann die Transportvorrichtung mit einer externen elektrischen Energiequelle verbunden sein und/oder eine interne elektrische Energiequelle wie zum Beispiel eine Batterie umfassen, um den Elektromagneten zu betreiben. Solche Permanentmagnete und/oder Elektromagnete sind bevorzugt dazu eingerichtet, beispielsweise mit der übergeordneten Struktur, bevorzugt mit einem Befestigungsabschnitt der übergeordneten Struktur, mit externen Magneten und/oder externen Elektromagneten und/oder einem magnetisierbaren Abschnitt, insbesondere einem magnetisierbaren Abschnitt der übergeordneten Struktur und/oder dem Befestigungsabschnitt der übergeordneten Struktur zu wechselwirken. Die Magnetanordnung kann insbesondere durch einen Abschnitt des Montageabschnitts definiert sein, welcher dazu eingerichtet ist, magnetisch und/oder elektromagnetisch insbesondere mit einem externen Permanentmagneten und/oder externen Elektromagneten zu wechselwirken, welcher beispielsweise an der übergeordneten Struktur und/oder dem Befestigungsabschnitt der übergeordneten Struktur vorgesehen ist. In Ausführungsformen, in welchen Permanentmagnete vorgesehen sind, haben diese den Vorteil, dass sie durch magnetische Wechselwirkungen eine magnetische Kraft bewirken können, welche beispielsweise durch eine vorab wählbare Magnetstärke des Permanentmagneten derart festgelegt werden kann, dass eine konstante vorbestimmte Auslösekraft eingerichtet werden kann. In Ausführungsformen, in welchen Elektromagnete vorgesehen sind, haben diese den Vorteil, dass sie durch elektromagnetische Wechselwirkungen eine gezielt steuerbare elektromagnetische Kraft bewirken können, mit welcher eine vorbestimmte Auslösekraft eingerichtet und jederzeit variiert werden kann. Insbesondere ist eine Kombination von Permanentmagneten und Elektromagneten zur gezielten Beeinflussung der Auslösekraft vorteilhaft. Zum Beispiel kann ein Elektromagnet dazu eingerichtet sein, die Ausweichbewegung des Transportmittels kontrolliert zuzulassen und/oder zu bewirken, beispielsweise durch Variation der durch den Elektromagneten hervorgerufenen elektromagnetischen Kräfte. So kann zum Beispiel ein Halteeingriff zwischen Montageabschnitt der Transportvorrichtung und übergeordneter Struktur gezielt aufgehoben werden, indem der Elektromagnet deaktiviert oder sein Magnetfeld umgekehrt wird.

In einem bevorzugten Ausführungsbeispiel des ersten Aspekts weist der Montageabschnitt einen Federmechanismus, einen Gummibandmechanismus, einen Schnappmechanismus und/oder einen Klemmmechanismus auf. Derartige Mechanismen sind insbesondere dafür geeignet, die Transportvorrichtung in einer Normalposition an der übergeordneten Struktur zu halten und, wenn auf das Transportmittel eine Kraft einwirkt, die eine vorbestimmte Auslösekraft überschreitet, eine Ausweichbewegung des Transportmittels zu erlauben. Insbesondere weist der Montageabschnitt einen Kopplungspunkt auf. Insbesondere kann an einem solchen Kopplungspunkt beispielsweise eine Feder eines Federmechanismus und/oder ein Gummiband eines Gummibandmechanismus befestigt sein. Dabei kann die Feder des Federmechanismus und/oder das Gummiband des Gummibandmechanismus zudem an einem Kopplungspunkt der übergeordneten Struktur befestigt sein, sodass beispielsweise eine Rückstellkraft zwischen den Kopplungspunkten des Montageabschnitts und der übergeordneten Struktur wirkt. Beispielsweise kann die Auslösekraft über die Federstärke der Feder und/oder die Elastizität des Gummibandes eingestellt werden. Insbesondere kann ein solcher Kopplungspunkt des Montageabschnitts beispielsweise Teil eines Schnappmechanismus und/oder eines Klemmmechanismus sein und kann insbesondere mit einem Kopplungspunkt an der übergeordneten Struktur in Eingriff stehen, welcher bevorzugt Teil eines Gegenstücks des Schnappmechanismus und/oder des Klemmmechanismus ist, welches an der übergeordneten Struktur angeordnet ist. Beispielsweise kann die Auslösekraft über die Stärke eines solchen Eingriffs eingestellt werden.

Vorteilhafterweise kann der Montageabschnitt mehrere der zuvor genannten Ausführungsformen umfassen.

In einer vorteilhaften bevorzugten Ausbildung des ersten Aspekts wird eine Haltekraft des Montageabschnitts teilweise oder im Wesentlichen vollständig durch eine Gewichtskraft der Transportvorrichtung erzeugt. Insbesondere in Ausführungsformen, in welchen der Montageabschnitt über der übergeordneten Struktur und/oder dem Befestigungsabschnitt der übergeordneten Struktur angeordnet ist, kann die Gewichtskraft der Transportvorrichtung eine Trägheitskraft hervorrufen, welche in der Größenordnung der angestrebten Auslösekraft liegt. Dann kann es vorteilhaft sein, keine oder eine optionale zusätzliche Haltekraft zwischen der Transportvorrichtung und/oder dem Montageabschnitt der Transportvorrichtung und der übergeordneten Struktur zu bewirken, sodass sich die Wirkungen von Gewichtskraft und optionaler zusätzlicher Haltekraft zu der vorbestimmten Auslösekraft ergänzen. Ein Verstärken der Haltekraft kann beispielsweise mit Hilfe von Magneten, einem Federmechanismus, einem Gummibandmechanismus, einem Schnappmechanismus und/oder einem Klemmmechanismus wie zuvor beschrieben erzielt werden.

Ein weiteres bevorzugtes Ausführungsbeispiel des ersten Aspekts umfasst ferner mindestens einen Antriebseingriffsabschnitt, welcher dafür eingerichtet ist, mit einem externen Antriebselement in Eingriff zu treten, um Antriebskraft von dem externen Antriebselement auf das Transportmittel zu übertragen. Insbesondere wird ein Antrieb des Transportmittels unterbrochen, wenn der Antriebseingriffsabschnitt, bevorzugt gemeinsam mit dem Transportmittel, bei einer Ausweichbewegung des Transportmittels bewegt wird, sodass der Eingriff des Antriebseingriffsabschnitts mit dem externen Antriebselement aufgehoben wird. Eine solche Ausführungsform bietet beispielsweise den Vorteil, dass keine Zusätzliche Steuerung für eine Ausschaltautomatik vorgesehen werden muss. In einem Ausführungsbeispiel kann Antriebskraft in Form von mechanischer Kraft auf das Transportmittel übertragen werden. Insbesondere kann der Antriebseingriffsabschnitt dazu Kraft-oder Formschlüssig mit dem externen Antriebselement in Eingriff stehen. Dabei sind bevorzugt ein solcher Antriebseingriffsabschnitt und ein solches externes Antriebselement jeweils als Zahnräder, insbesondere das externe Antriebselement als Schneckentrieb ausgeführt, welche in Eingriff stehen, wenn die Transportvorrichtung an der übergeordneten Struktur gehalten oder abgestützt ist. In einem weiteren Ausführungsbeispiel kann Antriebskraft in Form von elektrischer Energie auf das Transportmittel übertragen werden, insbesondere wobei der Antriebseingriff elektrische Kontakte umfassen kann, welche dazu eingerichtet sind, Antriebskraft in Form von elektrischer Energie von einem externen Antriebselement, insbesondere von einer elektrischen Energiequelle zu erhalten. Ferner kann die Transportvorrichtung in diesem alternativen Ausführungsbeispiel einen Elektromotor umfassen, welcher dazu eingerichtet ist, mit Hilfe dieser elektrischen Energie betrieben zu werden und das Transportmittel zur Bewegung entlang des Bewegungspfads anzutreiben.

Gemäß einem zweiten Aspekt der Erfindung wird die vorstehend genannte Aufgabe gelöst durch ein Transportsystem zum Transportieren von Objekten entlang eines Transportwegs, wobei das Transportsystem in dieser Reihenfolge entlang des Transportwegs aufeinanderfolgend eine erste Transportvorrichtung oder einen Ausgangs-Verarbeitungsbereich, eine zweite Transportvorrichtung entsprechend der vorangegangenen Beschreibungen, und eine dritte Transportvorrichtung oder einen Ziel-Verarbeitungsbereich umfasst. Indem eine zweite Transportvorrichtung vorgesehen ist, anstatt dass beispielsweise die erste Transportvorrichtung oder der Ausgangs-Verarbeitungsbereich benachbart zu der dritten Transportvorrichtung oder dem Ziel-Verarbeitungsbereich angeordnet ist, können insbesondere die zuvor genannten Vorteile einer solchen zweiten Transportvorrichtung realisiert werden. Entsprechend kann beispielsweise effektiv das Risiko minimiert werden, dass eine Person, ein Gegenstand und/oder eine Vorrichtung verletzt beziehungsweise beschädigt wird, sollte die Person und/oder der Gegenstand durch ein Transportmittel erfasst und potentiell eingeklemmt werden.

In einem bevorzugten Ausführungsbeispiel des zweiten Aspekts umfasst mindestens eine aus erster Transportvorrichtung und dritter Transportvorrichtung einen Träger und ein Transportmittel, wobei das Transportmittel beweglich an dem Träger gelagert ist, sodass es eine Bewegung entlang eines definierten Bewegungspfads ausführt, wobei das Transportmittel mindestens eine Kontaktfläche aufweist, welche dafür eingerichtet ist, ein Objekt zu kontaktieren und entlang des Transportwegs mitzunehmen.

In einer bevorzugten Weiterbildung des zweiten Aspekts ist der Montageabschnitt des Trägers der zweiten Transportvorrichtung mit dem Träger der ersten Transportvorrichtung oder/und mit dem Träger der dritten Transportvorrichtung verbunden. Insbesondere bildet der Träger der ersten Transportvorrichtung und/oder der dritten Transportvorrichtung eine übergeordnete Struktur, an welcher der Montageabschnitt des Trägers der zweiten Transportvorrichtung die zweite Transportvorrichtung halten oder abstützen kann. Beispielsweise kann der Träger der ersten Transportvorrichtung und/oder der dritten Transportvorrichtung einen Halter umfassen, welcher sich insbesondere in einen Raum zwischen erster Transportvorrichtung oder Ausgangs-Verarbeitungsbereich und dritter Transportvorrichtung oder Ziel-Verarbeitungsbereich erstreckt. Bevorzugt ist der Montageabschnitt des Trägers der zweiten Transportvorrichtung derart mit dem Halter verbunden, dass die zweite Transportvorrichtung in dem Raum zwischen erster Transportvorrichtung oder Ausgangs-Verarbeitungsbereich und dritter Transportvorrichtung oder Ziel-Verarbeitungsbereich angeordnet ist.

Vorteilhafterweise kann mindestens eine aus erster Transportvorrichtung und dritter Transportvorrichtung zur Übertragung von Antriebsbewegung mit der zweiten Transportvorrichtung gekoppelt oder koppelbar sein, um das Transportmittel der zweiten Transportvorrichtung zur Bewegung entlang des Bewegungspfads anzutreiben. Beispielsweise kann über eine entsprechende Kopplung das Transportmittel der zweiten Transportvorrichtung mit einem Antrieb der ersten Transportvorrichtung und/oder der dritten Transportvorrichtung wirkverbunden sein. Das hat die Vorteile, dass, insbesondere wenn für die zweite Transportvorrichtung kein gesonderter Antrieb vorgesehen werden muss, diese kompakt konstruiert werden kann, um auch in schmalen Räumen zwischen erster Transportvorrichtung oder Ausgangs-Verarbeitungsbereich und dritter Transportvorrichtung oder Ziel-Verarbeitungsbereich eingesetzt werden zu können, und dass ein Betrieb der zweiten Transportvorrichtung gemeinsam mit der ersten Transportvorrichtung und/oder mit der dritten Transportvorrichtung gesteuert werden kann. Insbesondere ist eine gesonderte Steuerung für die zweite Transportvorrichtung dabei nicht erforderlich. Bevorzugt kann eine Kopplung wie weiter oben beschrieben realisiert sein. Dabei kann die zweite Transportvorrichtung einen Antriebseingriffsabschnitt aufweisen, welcher dafür eingerichtet ist, mit einem externen Antriebselement der ersten und/oder der dritten Transportvorrichtung in Eingriff zu treten, um Antriebskraft von dem externen Antriebselement auf das Transportmittel der zweiten Transportvorrichtung zu übertragen. In einem Ausführungsbeispiel kann Antriebskraft in Form von mechanischer Kraft auf das Transportmittel der zweiten Transportvorrichtung übertragen werden. Insbesondere kann der Antriebseingriffsabschnitt dazu Kraft-oder Formschlüssig, beispielsweise mittels Zahnrädern, mit dem externen Antriebselement in Eingriff stehen. In einem weiteren Ausführungsbeispiel kann Antriebskraft in Form von elektrischer Energie auf das Transportmittel der zweiten Transportvorrichtung übertragen werden.

Bevorzugt kann die Kopplung eine Zahnkopplung sein. Eine Zahnkopplung stellt eine wirksame und sichere Form der Übertragung von Antriebskraft dar. Insbesondere wenn die erste Transportvorrichtung und/oder die dritte Transportvorrichtung ein rotierendes Element umfasst, welches in den Antrieb des entsprechenden Transportmittels involviert ist und/oder davon angetrieben wird, wie zum Beispiel eine Umlenkrolle am Ende der Transportvorrichtung, kann eine Zahnkopplung mit diesem rotierenden Element wirkverbunden sein. So kann eine auf das erste Transportmittel und/oder das dritte Transportmittel wirkende Antriebskraft, welche in der Rotation des rotierenden Elements resultiert, mechanisch auf die zweite Transportvorrichtung übertragen werden.

Vorteilhafterweise kann die Kopplung derart eingerichtet sein, dass sie bei der Ausweichbewegung des Transportmittels getrennt wird, um die Übertragung der Antriebsbewegung zu unterbrechen. Eine Unterbrechung der Antriebsbewegung im Rahmen einer Ausweichbewegung erhöht die Sicherheit eines erfindungsgemäßen Transportsystems. Beispielsweise kann eine Person und/oder ein Objekt, welche und/oder welches zwischen zweiter Transportvorrichtung und erster Transportvorrichtung oder Ausgangs-Verarbeitungsbereich und/oder zwischen zweiter Transportvorrichtung und dritter Transportvorrichtung oder Ziel-Verarbeitungsbereich eingeklemmt ist, mit dem Transportmittel wenigstens der zweiten Transportvorrichtung in Eingriff stehen. Jedes Transportmittel, das an der Einklemmung beteiligt ist und dessen Transportmittel mit der Person und/oder dem Gegenstand in Eingriff steht, trägt durch eine Antriebsbewegung zusätzlich zum Krafteintrag bei. Indem die Übertragung der Antriebsbewegung auf die zweite Transportvorrichtung unterbrochen wird, wird auch der resultierende Krafteintrag beschränkt. Insbesondere hat eine entsprechende Trennung der Kopplung den Vorteil, dass die Unterbrechung der Übertragung der Antriebsbewegung auf die zweite Transportvorrichtung automatisch mit der Ausweichbewegung erfolgt und keine zusätzliche Steuerung für die Unterbrechung erforderlich ist.

In bevorzugten Weiterbildungen des zweiten Aspekts kann ein Zwischenraum zwischen den Transportmitteln benachbarter Transportvorrichtungen bevorzugt kleiner als 15 mm sein und/oder ein Zwischenraum zwischen dem Transportmittel einer Transportvorrichtung und eines benachbarten Verarbeitungsbereichs bevorzugt kleiner als 15 mm sein, wenn das Transportmittel der zweiten Transportvorrichtung sich entlang des definierten Bewegungspfads bewegt, wobei der Zwischenraum zwischen den Transportmitteln benachbarter Transportvorrichtungen dann größer als 20 mm, vorzugsweise größer ist als 50 mm, sein kann, wenn das Transportmittel der zweiten Transportvorrichtung die Ausweichbewegung ausgeführt hat. Eine entsprechend nahe Anordnung benachbarter Transportmittel und/oder eines Transportmittels und eines benachbarten Verarbeitungsbereichs hat den Vorteil, dass ein Übergang von zu transportierenden Objekten über einen entsprechenden Zwischenraum erleichtert wird und dass die Wahrscheinlichkeit reduziert wird, dass insbesondere kleine Teile von Objekten wie zum Beispiel abstehende Elemente von Verpackungen in den Zwischenraum gelangen, dort erfasst werden und daraufhin das Objekt selbst zu dem Zwischenraum gezogen und eingeklemmt wird. Ebenso wird die Wahrscheinlichkeit reduziert, dass Personen beispielsweise mit Fingern in den Zwischenraum gelangen.

In einem bevorzugten Ausführungsbeispiel des zweiten Aspekts weist ein der zweiten Transportvorrichtung zugeordneter Abschnitt des Transportwegs eine Länge auf, die kleiner ist als 1 m, vorzugsweise kleiner ist als 0,6 m, besonders bevorzugt kleiner ist als 0,3 m. Insbesondere kann somit auch das Transportmittel der zweiten Transportvorrichtung beziehungsweise die zweite Transportvorrichtung selbst entsprechend kompakt dimensioniert werden. Eine solche kompakte Dimensionierung ermöglicht beispielsweise eine sichere und schnelle Ausweichbewegung des Transportmittels der zweiten Transportvorrichtung und/oder der zweiten Transportvorrichtung, bevorzugt entlang entsprechend kurzer Auslösepfade, wobei auch die Wahrscheinlichkeit für Kollisionen mit und Schäden an weiteren Komponenten des Transportsystems reduziert wird.

Die Erfindung wird nachfolgend anhand eines bevorzugten Ausführungsbeispiels unter Bezugnahme auf die Zeichnungen näher erläutert. In den Zeichnungen zeigen:
- Fig. 1: eine isometrische Ansicht einer Transportvorrichtung 1 gemäß dem bevorzugten Ausführungsbeispiel der Erfindung,
- Fig. 2: eine seitliche Ansicht der Transportvorrichtung 1 gemäß dem bevorzugten Ausführungsbeispiel der Erfindung,
- Fig. 3: eine isometrische Ansicht eines Transportsystems 2 gemäß dem bevorzugten Ausführungsbeispiel der Erfindung,
- Fig. 4: eine Seitenansicht des Transportsystems 2 gemäß dem bevorzugten Ausführungsbeispiel der Erfindung,
- Fig. 5: eine Seitenansicht des Transportsystems 2 gemäß dem bevorzugten Ausführungsbeispiel der Erfindung, welche den Effekt einer Ausweichbewegung 3 veranschaulicht.

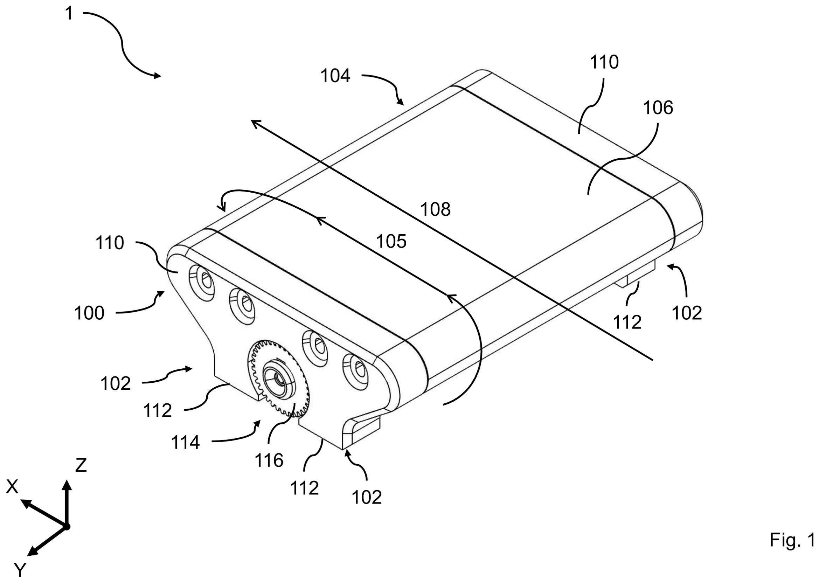

Fig. 1 zeigt eine isometrische Ansicht einer Transportvorrichtung 1 gemäß dem bevorzugten Ausführungsbeispiel der Erfindung. Die Transportvorrichtung 1 umfasst einen Träger 100, welcher einen Montageabschnitt 102 aufweist, der dafür eingerichtet ist, die Transportvorrichtung 1 an einer übergeordneten Struktur 206, welche hier nicht gezeigt ist, zu halten oder abzustützen; ein Transportmittel 104, welches beweglich an dem Träger 100 gelagert ist, so dass es eine Bewegung entlang eines definierten, zyklischen Bewegungspfads 105 ausführt; wobei das Transportmittel 104 eine Kontaktfläche 106 aufweist, welche dafür eingerichtet ist, ein Objekt zu kontaktieren und entlang des Transportwegs 108 mitzunehmen. In dem bevorzugten Ausführungsbeispiel umfasst der Träger 100 zwei Seitenelemente 110, zwischen denen das Transportmittel 104 geführt ist. Der Montageabschnitt 102 umfasst Standflächen 112 an der Unterseite der Seitenelemente 110. In dem bevorzugten Ausführungsbeispiel ist das Transportmittel 104 ein umlaufendes Transportband 104, dessen Bewegungspfad 105 durch mindestens zwei im Abstand angeordnete Umlenkmittel definiert ist, um welche das Transportband 104 umläuft. Diese Umlenkmittel liegen hier im Inneren der Transportvorrichtung 1 und sind in Fig. 1 nicht dargestellt. Der Bewegungspfad 105 des Transportbands 104 beschreibt einen in etwa dreieckigen Pfad mit abgerundeten Ecken. Die beispielhafte Transportvorrichtung 1 umfasst ferner einen Antriebseingriffsabschnitt 114, welcher dafür eingerichtet ist, mit einem externen Antriebselement in Eingriff zu treten, welches hier nicht gezeigt ist, um Antriebskraft von dem externen Antriebselement auf das Transportmittel 104 zu übertragen. Der Antriebseingriffsabschnitt 114 umfasst hier beispielhafterweise ein Zahnrad 116, welches mit einer Antriebswelle 122 der Transportvorrichtung 1 wirkverbunden ist, welche hier ebenfalls nicht dargestellt ist.

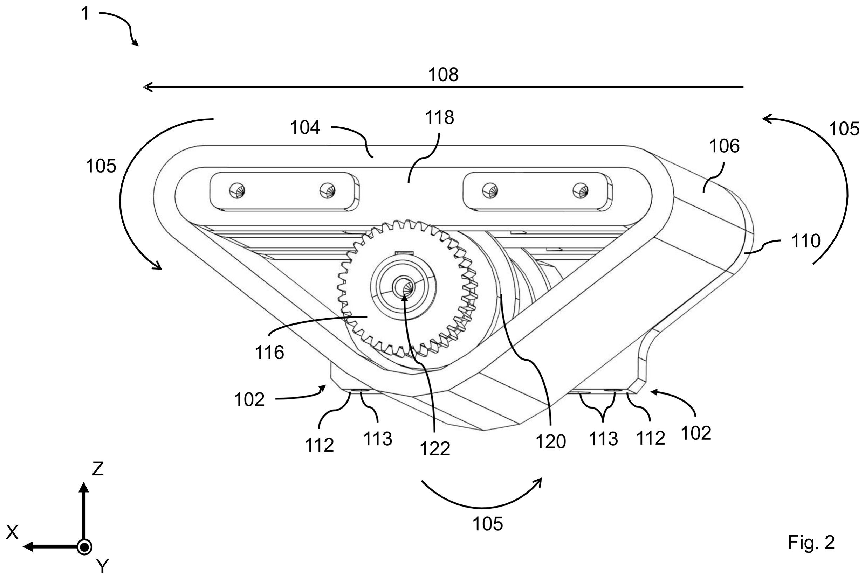

Fig. 2 zeigt eine seitliche Ansicht der Transportvorrichtung 1 gemäß dem bevorzugten Ausführungsbeispiel der Erfindung. In dieser Ansicht ist das Seitenelement 110, welches auf der Seite des Zahnrads 116 des Antriebseingriffsabschnitts 114 liegt, ausgeblendet. Im Detail zu sehen sind hier eine Seite des Transportbands 104, die Umlenkmittel, das Zahnrad 116, sowie die Antriebswelle 122 des Antriebseingriffsabschnitts 114. Die Umlenkmittel umfassen dabei Schienen 118 mit abgerundeten Enden, bevorzugt mit Rollen an den abgerundeten Enden, sowie Antriebsräder 120, welche mit der Antriebswelle 122 wirkverbunden sind. Die Schienen 118 sind mit den Seitenelementen 110 verbunden und bilden bevorzugt einen weiteren Teil des Trägers 100. Insbesondere definieren die Schienen 118 einen in etwa ebenen Abschnitt des zyklischen Bewegungspfads 105. Insbesondere stützen die Schienen 118 das Transportband 104 in diesem Abschnitt des zyklischen Bewegungspfads 105, bevorzugt wenn eine Gewichtskraft eines zu transportierenden Objektes auf das Transportband 104 einwirkt. Weiter bevorzugt stützen die Schienen 118 das Transportband 104 von unten. Die Antriebsräder 120 stehen im Eingriff mit dem Transportband 104, um zu ermöglichen, dass Antriebskraft von dem externen Antriebselement auf das Transportmittel 104 übertragen wird. Insgesamt ergibt sich dadurch ein in etwa dreieckiger Bewegungspfad 105 des Transportmittels 104 mit bevorzugt abgerundeten Ecken. An der Unterseite des Montageabschnitts 102 sind die Standflächen 112 zu sehen. An der Unterseite des Montageabschnitts 102 sind ferner Magnetanordnungen 113 vorgesehen.

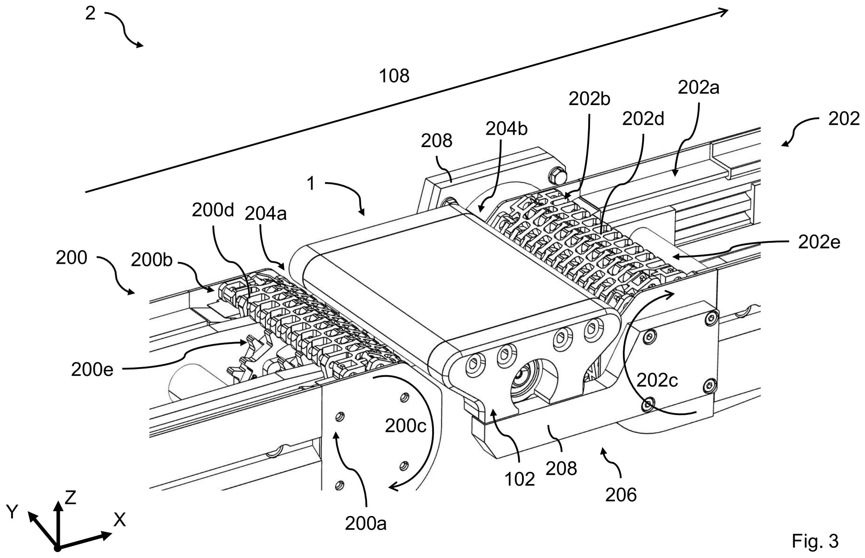

Fig 3, Fig. 4 und Fig. 5 zeigen ein exemplarisches Transportsystem 2 gemäß dem bevorzugten Ausführungsbeispiel der Erfindung.

In Fig. 3 ist das exemplarische Transportsystem 2 in einer isometrischen Ansicht gezeigt. Von links nach rechts sind gezeigt eine erste Transportvorrichtung 200, eine zweite Transportvorrichtung 1 und eine dritte Transportvorrichtung 202. Die zweite Transportvorrichtung 1 entspricht beispielsweise der in Fig. 1 und Fig. 2 gezeigten Transportvorrichtung 1 entsprechend dem bevorzugten Ausführungsbeispiel der Erfindung. Die erste Transportvorrichtung 200 und die dritte Transportvorrichtung 202 umfassen einen Träger 200a,202a und ein Transportmittel 200b,202b, wobei das Transportmittel 200b,202b beweglich an dem Träger 200a,202a gelagert ist, sodass es eine Bewegung entlang eines definierten Bewegungspfads 200c,202c ausführt, wobei das Transportmittel 200b,202b eine Kontaktfläche 200d,202d aufweist, welche dafür eingerichtet ist, ein Objekt zu kontaktieren und entlang des Transportwegs 108 mitzunehmen. Die Transportmittel 200b,202b der ersten Transportvorrichtung 200 und der dritten Transportvorrichtung 202 sind in diesem Ausführungsbeispiel kettenartig ausgeführt, wobei insbesondere jeweils zwei Kettenglieder entlang wenigstens einer Achsen, insbesondere entlang einer in etwa horizontalen und einer in etwa vertikalen Achse, welche bevorzugt in etwa senkrecht zu dem Transportweg 108 ausgerichtet sind, gelenkig miteinander verbunden sind. In Fig. 3 bis Fig. 5 sind Teile der Transportmittel 200b,202b der ersten Transportvorrichtung 200 und der dritten Transportvorrichtung 202 ausgeblendet, damit weitere, darunter liegende Komponenten sichtbar sind. Die Träger 200a,202a der ersten Transportvorrichtung 200 und der dritten Transportvorrichtung 202 umfassen jeweils an den Enden ihrer Transportwege Zahnräder 200e,202e, welche dazu eingerichtet sind, in das jeweilige Transportmittel 200b,202b einzugreifen, um eine Antriebskraft auf das Transportmittel 200b,202b zu übertragen, und welche dazu eingerichtet sind, als eine Umlenkrolle 200e,202e für das Transportmittel 200b,202b zu fungieren. Der Transportweg 108 eines zu transportierenden Objekts erstreckt sich über alle drei Transportvorrichtungen 200,1,202. Am Ende der ersten Transportvorrichtung 200 geht das zu transportierende Objekt auf die zweite Transportvorrichtung 1 über, an deren Ende wiederum das Objekt auf die dritte Transportvorrichtung 202 übergeht. Insbesondere weist ein der zweiten Transportvorrichtung 1 zugeordneter Abschnitt des Transportwegs 108 eine Länge auf, die kleiner ist als 1 m, vorzugsweise kleiner ist als 0,6 m, besonders bevorzugt kleiner ist als 0,3 m. Dabei sind die drei Transportvorrichtungen 200,1,202 derart angeordnet, dass Zwischenräume 204a,204b zwischen der ersten Transportvorrichtung 200 und der zweiten Transportvorrichtung 1 sowie zwischen der zweiten Transportvorrichtung 1 und der dritten Transportvorrichtung 202 derart klein sind, dass das zu transportierende Objekt bei einem Übergang zwischen den Transportvorrichtungen 200,1,202 nicht in diese Freiräume fallen kann. Insbesondere ist ein Zwischenraum 204a,204b zwischen den Transportmitteln 200b,104,202b benachbarter Transportvorrichtungen 200,1,202 kleiner als 15 mm. Eine günstige Anordnung der Transportvorrichtungen 200,1,202 wird insbesondere durch die Wahl der jeweiligen Bewegungspfade 200c,105,202c der Transportmittel 200b,104,202b erreicht. An den Enden der ersten Transportvorrichtung 200 und dritten Transportvorrichtung 202 beschreiben die Transportmittel 200b,202b jeweils einen in etwa halbkreisförmigen Bewegungspfad 200c,202c. Der Bewegungspfad 105 des Transportmittels 104 der zweiten Transportvorrichtung 1 weist eine in etwa dreieckige Form auf. Dadurch kann die zweite Transportvorrichtung 1 in etwa keilartig zwischen der ersten Transportvorrichtung 200 und der dritten Transportvorrichtung 202 angeordnet werden und die Freiräume zwischen den Transportvorrichtungen 200,1,202 können minimiert werden. Eine übergeordnete Struktur 206 ist beispielhaft als Teil der dritten Transportvorrichtung 202 ausgebildet. Dazu sind zwei Halter 208 an den Seiten des Trägers 202a der dritten Transportvorrichtung 202 angebracht, auf welchen die zweite Transportvorrichtung 1 positioniert ist. Der Montageabschnitt 102 des Trägers 100 der zweiten Transportvorrichtung 1 ist also mit dem Träger 202a der dritten Transportvorrichtung 202 verbunden. Dabei ruht die zweite Transportvorrichtung 1 mit ihrer Gewichtskraft auf der übergeordneten Struktur 206. Das heißt, der Halter 208 der dritten Transportvorrichtung 202 trägt die zweite Transportvorrichtung 1. Zusätzlich sind in dem Halter 208 der dritten Transportvorrichtung 202 insbesondere Magnete 214 vorgesehen, welche durch den Montageabschnitt 102 verdeckt und hier nicht dargestellt sind. Diese Magnete 214 sind dazu eingerichtet, mit der Magnetanordnung 113 der zweiten Transportvorrichtung 1 zu wechselwirken und eine Magnetkraft zu bewirken, die eine zusätzliche Haltekraft hervorruft. Die Gewichtskraft der zweiten Transportvorrichtung 1 und diese Magnetkraft bewirken gemeinsam eine vorbestimmte Haltekraft und damit eine vorbestimmte Auslösekraft.

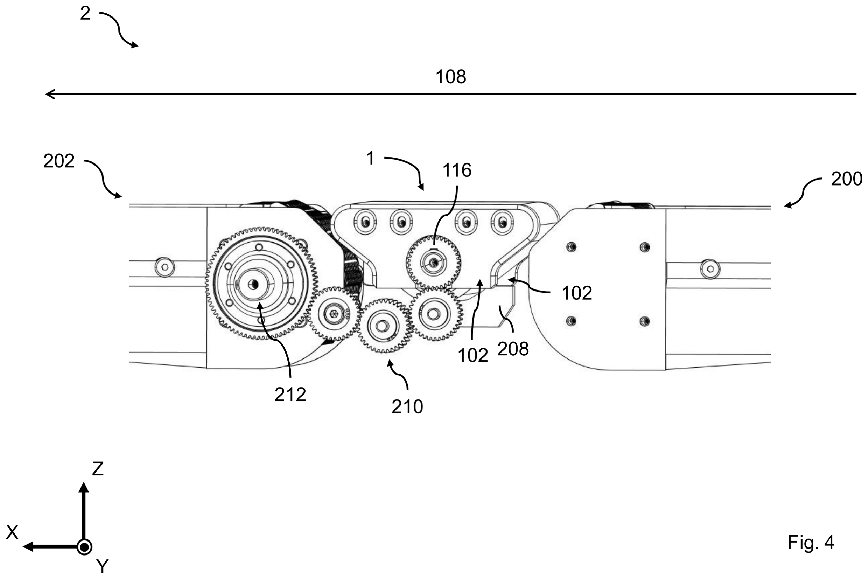

Fig. 4 zeigt eine Seitenansicht des Transportsystems 2 gemäß dem bevorzugten Ausführungsbeispiel der Erfindung. Dabei ist eine Abdeckung einer der zuvor beschriebenen Halter 208 ausgeblendet, sodass ein Kopplungsmechanismus 210 sichtbar ist, über welchen die dritte Transportvorrichtung 202 zur Übertragung von Antriebskraft auf das Transportmittel 104 der zweiten Transportvorrichtung 1 mit ebendieser gekoppelt ist. Mit Hilfe der übertragenen Antriebskraft kann das Transportmittel 104 der zweiten Transportvorrichtung 1 zur Bewegung entlang des Bewegungspfads 105 angetrieben werden. Dieser Kopplungsmechanismus 210 ist hier eine Zahnkopplung und umfasst Zahnräder, welche mit einem Antrieb des Transportmittels 202b der dritten Transportvorrichtung 202 über eine Antriebskopplung 212 wirkverbunden sind. Das Zahnrad 116 des Antriebseingriffsabschnitts 114 der zweiten Transportvorrichtung 1 steht im Eingriff mit dem Kopplungsmechanismus 210. Bevorzugt sind die Magnete 214 der dritten Transportvorrichtung 202 derart ausgebildet und in den Haltern 208 angeordnet, dass die Wechselwirkung zwischen der Magnetanordnung 113 der zweiten Transportvorrichtung 1 und den Magneten 214 ein präzises Positionieren der zweiten Transportvorrichtung1 an einer vorbestimmten Position ermöglicht. Damit wird beispielsweise ein optimaler Eingriff zwischen Kopplungsmechanismus 210 der dritten Transportvorrichtung 202 und Antriebseingriffsabschnitt 114 der zweiten Transportvorrichtung 1 sichergestellt.

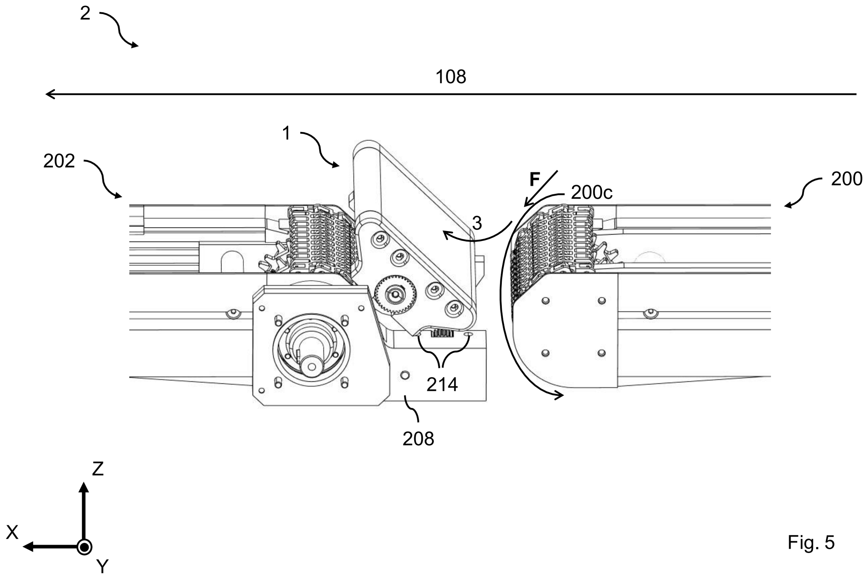

Fig. 5 zeigt eine Seitenansicht des Transportsystems 2 gemäß dem bevorzugten Ausführungsbeispiel der Erfindung und veranschaulicht exemplarisch den Effekt einer Ausweichbewegung 3 der zweiten Transportvorrichtung 1. Die in Fig. 4 ausgeblendete Abdeckung des Halters 208 ist hier eingeblendet, sodass auch die in dem Halter 208 vorgesehenen Magnete 214 der dritten Transportvorrichtung 202 dargestellt werden. Eine Kraft F hat auf das Transportmittel 104 der zweiten Transportvorrichtung 1 eingewirkt, welche die von der Gewichtskraft der Vorrichtung und von der Magnetkraft hervorgerufene Haltekraft und damit die vorbestimmte Auslösekraft überschritten hat. Diese Kraft F kann beispielsweise dadurch hervorgerufen worden sein, dass sich eine Person und/oder ein Objekt an dem Transportmittel 200b der ersten Transportvorrichtung 200 verfangen hat und insbesondere entlang des halbkreisförmigen Bewegungspfads 200c davon am Ende der ersten Transportvorrichtung 200 mitgezogen worden ist. Durch die Krafteinwirkung F ist die zweite Transportvorrichtung 1 in Richtung der dritten Transportvorrichtung 202 verschoben und in eine dazu entgegengesetzte Richtung verkippt worden. Entsprechend erfolgte auch eine Ausweichbewegung 3 des Transportmittels 104 der zweiten Transportvorrichtung 1 entlang eines von dem Bewegungspfad 105 des Transportmittels 104 abweichenden Auslösepfads. In Folge der Ausweichbewegung 3 wurde der Abstand zwischen erster Transportvorrichtung 200 und zweiter Transportvorrichtung 1 vergrößert, sodass bevorzugt eine Verletzung der Person und/oder eine Beschädigung von Objekt und/oder Komponenten des Transportsystems 2 unterbunden wurde. Insbesondere wurden auch der Eingriff zwischen dem Zahnrad 116 des Antriebseingriffsabschnitts 114 der zweiten Transportvorrichtung 1 mit dem Kopplungsmechanismus 210 und damit auch der Antrieb des Transportmittels 104 der zweiten Transportvorrichtung 1 unterbrochen. Allgemein können vorteilhafterweise Sensoren vorgesehen sein, insbesondere in einem Transportsystem 2 entsprechend der vorangegangenen Beschreibungen, welche dazu eingerichtet sind, festzustellen, ob eine Ausweichbewegung 3 des Transportmittels 104 der erfindungsgemäßen Transportvorrichtung 1 erfolgt, insbesondere erfolgt ist. Insbesondere kann das Transportsystem 2 dazu eingerichtet sein, wenn eine Ausweichbewegung 3 erfolgt, bevorzugt wenn eine solche Ausweichbewegung 3 durch die Sensoren festgestellt ist, einen Antrieb einer weiteren Transportvorrichtung 200,202 des Transportsystems 2 abzustellen. In dem bevorzugten Ausführungsbeispiel des Transportsystems 2 ist beispielsweise ein Kontaktsensor in einem Halter 208 vorgesehen, welcher dazu eingerichtet ist, einen Kontakt zu dem Montageabschnitt 102 der zweiten Transportvorrichtung 1 festzustellen, beispielsweise wenn diese wie in Fig. 3 und Fig.4 dargestellt positioniert ist. Durch eine Ausweichbewegung 3 wird dieser Kontakt unterbrochen, sodass der Kontaktsensor die Ausweichbewegung 3 feststellt und basierend darauf der Antrieb einer weiteren Transportvorrichtung 200,202, bevorzugt von allen weiteren Transportvorrichtungen 200,202 unterbrochen wird.

## Patentansprüche

1. Transportvorrichtung (1) zum Transportieren von Objekten entlang eines Transportwegs (108), umfassend
- einen Träger (100), welcher einen Montageabschnitt (102) aufweist, der dafür eingerichtet ist, die Transportvorrichtung (1) an einer übergeordneten Struktur (206) zu halten oder abzustützen,
- ein Transportmittel (104), welches beweglich an dem Träger (100) gelagert ist, so dass es eine Bewegung entlang eines definierten, zyklischen Bewegungspfads (105) ausführt, wobei das Transportmittel (104) mindestens eine Kontaktfläche (106) aufweist, welche dafür eingerichtet ist, ein Objekt zu kontaktieren und entlang des Transportwegs (108) mitzunehmen,
**dadurch gekennzeichnet, dass** die Transportvorrichtung (1) dafür eingerichtet ist, eine Ausweichbewegung (3) des Transportmittels (104) entlang eines von dem Bewegungspfad (105) des Transportmittels (104) abweichenden Auslösepfads zu erlauben, wenn auf das Transportmittel (104) eine Kraft einwirkt, die eine vorbestimmte Auslösekraft überschreitet.

2. Transportvorrichtung (1) nach Anspruch 1, wobei das Transportmittel (104) ein umlaufendes Transportband (104) ist, dessen Bewegungspfad (105) durch mindestens zwei im Abstand angeordnete Umlenkmittel definiert ist, um welche das Transportband (104) umläuft.

3. Transportvorrichtung (1) nach Anspruch 1 oder Anspruch 2, wobei der Montageabschnitt (102) dafür eingerichtet ist, einen Halteeingriff zwischen der Transportvorrichtung (1) und einer übergeordneten Struktur (206) aufrechtzuerhalten, wenn eine auf den Montageabschnitt (102) einwirkende Kraft kleiner ist als eine vorbestimmte Haltekraft des Montageabschnitts (102), und den Halteeingriff zu lösen, wenn eine auf den Montageabschnitt (102) einwirkende Kraft größer ist als die vorbestimmte Haltekraft des Montageabschnitts (102).

4. Transportvorrichtung (1) nach einem der vorhergehenden Ansprüche, wobei der Montageabschnitt (102) mindestens eine Magnetanordnung (113) aufweist.

5. Transportvorrichtung (1) nach einem der vorhergehenden Ansprüche, wobei eine Haltekraft des Montageabschnitts (102) teilweise oder im Wesentlichen vollständig durch eine Gewichtskraft der Transportvorrichtung (1) erzeugt wird.

6. Transportvorrichtung (1) nach einem der vorhergehenden Ansprüche, ferner umfassend mindestens einen Antriebseingriffsabschnitt (114), welcher dafür eingerichtet ist, mit einem externen Antriebselement in Eingriff zu treten, um Antriebskraft von dem externen Antriebselement auf das Transportmittel (104) zu übertragen.

7. Transportsystem (2) zum Transportieren von Objekten entlang eines Transportwegs (108), umfassend in der folgenden Reihenfolge aufeinanderfolgend entlang des Transportwegs
- eine erste Transportvorrichtung (200) oder einen Ausgangs-Verarbeitungsbereich,
- eine zweite Transportvorrichtung (1) nach einem der vorhergehenden Ansprüche, und
- eine dritte Transportvorrichtung (202) oder einen Ziel-Verarbeitungsbereich.

8. Transportsystem (2) nach Anspruch 7, wobei mindestens eine aus erster Transportvorrichtung (200) und dritter Transportvorrichtung (202) einen Träger (200a, 202a) und ein Transportmittel (200b,202b) umfasst, wobei das Transportmittel (200b,202b) beweglich an dem Träger (200a,202a) gelagert ist, so dass es eine Bewegung entlang eines definierten Bewegungspfads (200c,202c) ausführt, wobei das Transportmittel (200b,202b) mindestens eine Kontaktfläche (200d,202d) aufweist, welche dafür eingerichtet ist, ein Objekt zu kontaktieren und entlang des Transportwegs (108) mitzunehmen.

9. Transportsystem (2) nach Anspruch 8, wobei der Montageabschnitt (102) des Trägers (100) der zweiten Transportvorrichtung (1) mit dem Träger (200a) der ersten Transportvorrichtung (200) oder/und mit dem Träger (202a) der dritten Transportvorrichtung (202) verbunden ist.

10. Transportsystem (2) nach Anspruch 8 oder Anspruch 9, wobei mindestens eine aus erster Transportvorrichtung (200) und dritter Transportvorrichtung (202) zur Übertragung von Antriebsbewegung mit der zweiten Transportvorrichtung (1) gekoppelt oder koppelbar ist, um das Transportmittel (104) der zweiten Transportvorrichtung (1) zur Bewegung entlang des Bewegungspfads (105) anzutreiben.

11. Transportsystem (2) nach Anspruch 10, wobei die Kopplung eine Zahnkopplung ist.

12. Transportsystem (2) nach Anspruch 10 oder Anspruch 11, wobei die Kopplung derart eingerichtet ist, dass sie bei der Ausweichbewegung (3) des Transportmittels (104) getrennt wird, um die Übertragung der Antriebsbewegung zu unterbrechen.

13. Transportsystem (2) nach einem der Ansprüche 8 bis 12, wobei ein Zwischenraum (204a, 204b) zwischen den Transportmitteln (104, 200b, 202b) benachbarter Transportvorrichtungen (200, 1, 202) kleiner ist als 15 mm, wenn das Transportmittel (104) der zweiten Transportvorrichtung (1) sich entlang des definierten Bewegungspfads (105) bewegt, und wobei der Zwischenraum (204a, 204b) zwischen den Transportmitteln benachbarter Transportvorrichtungen größer ist als 20 mm, vorzugsweise größer ist als 50 mm, wenn das Transportmittel (104) der zweiten Transportvorrichtung (1) die Ausweichbewegung (3) ausgeführt hat.

14. Transportsystem (2) nach einem der Ansprüche 7 bis 13, wobei ein der zweiten Transportvorrichtung (1) zugeordneter Abschnitt des Transportwegs (108) eine Länge aufweist, die kleiner ist als 1 m, vorzugsweise kleiner ist als 0,6 m, besonders bevorzugt kleiner ist als 0,3 m.
